# EUROPEAN PATENT APPLICATION

(11) **EP 4 432 081 A1**
(43) Date of publication of application: **18.09.2024**
(21) Application number: 22891624.3
(22) Date of filing: 14.09.2022
(51) Int. Cl.: G06F 9/48

(54) **DATA PROCESSING METHOD AND APPARATUS, DEVICE, AND STORAGE MEDIUM**

(30) Priority: 10.11.2021 CN 202111330055
(71) Applicant: Ningbo Lotus Robotics Co., Ltd., Ningbo, Zhejiang 315335 (CN)
(72) Inventor: YE, Jie, Wuhan, Hubei 430056 (CN); YU, Yingjun, Wuhan, Hubei 430056 (CN); HAN, Qingyang, Wuhan, Hubei 430056 (CN); GAO, Feng, Wuhan, Hubei 430056 (CN); PAN, Jianwei, Wuhan, Hubei 430056 (CN); LI, Bo, Wuhan, Hubei 430056 (CN)
(74) Representative: Zaboliene, Reda
(86) International application number: PCT/CN2022/118690
(87) International publication number: WO 2023/082819

(57) **Abstract**

The present application discloses a data processing method and apparatus, a device, and a storage medium. The method comprises: obtaining data to be processed; sending a first synchronization processing request to a synchronization service, so that the synchronization service respectively feeds back request response information to a first user process and a second user process in response to the first synchronization processing request and a second synchronization processing request sent by the second user process; processing said data in a synchronization processing period on the basis of an activation timestamp to obtain a first data processing result; and sending the first data processing result to the synchronization service, so that the synchronization service compares the first data processing result with a second data processing result sent by the second user process, and sends the first data processing result, the second data processing result, and the comparison result to a consumer process when the comparison result is that the first data processing result is consistent with the second data processing result. By utilizing the solution of the present application, the reliability and security of the function of an automatic driving system can be improved.

## Description

### TECHNICAL FIELD

The present application relates to the technical field of computers, in particular to a data processing method and apparatus, a device, and a storage medium.

### BACKGROUND

With the development of autonomous driving, people have increasingly high requirements for safety design in the field of autonomous driving. According to the existing safety mechanism of the autonomous driving function, each service program node in an autonomous driving system is usually equipped with a corresponding redundant node to ensure driving safety.

However, in a data processing process of an autonomous driving system, there is a lack of corresponding guarantee mechanism to ensure consistency and correctness of data processing results of each service program node and its corresponding redundant node, thus it is difficult to truly achieve safety and stability of the autonomous driving system. Therefore, it is necessary to provide more secure and effective technical solutions.

### SUMMARY OF THE DISCLOSURE

The present application provides a data processing method and apparatus, a device, and a storage medium, which can improve consistency of data processing time and data processing results of user processes and their redundant processes, and thereby improve reliability and safety of functions of autonomous driving systems. Technical solutions of the present application are as follows.

In one aspect, a data processing method is provided, the method comprises:
obtaining data to be processed sent by a producer process;
sending a first synchronization processing request to a synchronization service, so that the synchronization service respectively feeds back request response information to a first user process and a second user process in response to the first synchronization processing request and a received second synchronization processing request sent by the second user process, wherein the request response information carries a synchronization processing period of the data to be processed and an activation timestamp of the synchronization processing period, the second user process is a redundant process of the first user process;
processing the data to be processed in the synchronization processing period based on the activation timestamp to obtain a first data processing result;
sending the first data processing result to the synchronization service, so that the synchronization service compares the first data processing result with a received second data processing result sent by the second user process to obtain a comparison result, and sends the first data processing result, the second data processing result, and the comparison result to a consumer process when the comparison result is that the first data processing result is consistent with the second data processing result.

In another aspect, a data processing method is provided, the method comprises:
respectively receiving a first synchronization processing request sent by a first user process and a second synchronization processing request sent by a second user process, wherein the first synchronization processing request is configured to request the first user process to synchronously process data to be processed sent by a producer process, the second synchronization processing request is configured to request the second user process to synchronously process the data to be processed sent by the producer process, and the second user process is a redundant process of the first user process;
in response to the first synchronization processing request and the second synchronization processing request, respectively feeding back request response information to the first user process and the second user process, wherein the request response information carries a synchronization processing period of the data to be processed and an activation timestamp of the synchronization processing period, so that the first user process and the second user process respectively process the data to be processed in the synchronization processing period based on the activation timestamp to obtain a first data processing result corresponding to the first user process and a second data processing result corresponding to the second user process;
respectively receiving the first data processing result sent by the first user process and the second data processing result sent by the second user process;
comparing the first data processing result with the second data processing result to obtain a comparison result;
sending the first data processing result, the second data processing result, and the comparison result to a consumer process when the comparison result is that the first data processing result is consistent with the second data processing result.

In another aspect, a data processing device is provided, the device runs a first user process, a second user process, and a synchronization service, the second user process is a redundant process of the first user process; wherein:
the first user process is configured to: obtain data to be processed sent by a producer process; send a first synchronization processing request to the synchronization service; receive request response information sent by the synchronization service, wherein the request response information carries a synchronization processing period of the data to be processed and an activation timestamp of the synchronization processing period; process the data to be processed in the synchronization processing period based on the activation timestamp to obtain a first data processing result; send the first data processing result to the synchronization service;
the second user process is configured to: obtain the data to be processed sent by the producer process; send a second synchronization processing request to the synchronization service; receive the request response information sent by the synchronization service; process the data to be processed in the synchronization processing period based on the activation timestamp to obtain a second data processing result; send the second data processing result to the synchronization service;
the synchronization service is configured to: respectively receive the first synchronization processing request sent by the first user process and the second synchronization processing request sent by the second user process; in response to the first synchronization processing request and the second synchronization processing request, respectively feed back the request response information to the first user process and the second user process; respectively receive the first data processing result sent by the first user process and the second data processing result sent by the second user process; compare the first data processing result with the second data processing result to obtain a comparison result; send the first data processing result, the second data processing result, and the comparison result to a consumer process when the comparison result is that the first data processing result is consistent with the second data processing result.

In another aspect, a data processing apparatus is provided, the apparatus comprises:
a data to be processed obtaining module configured to obtain data to be processed sent by a producer process;
a first synchronization processing request sending module configured to send a first synchronization processing request to a synchronization service, so that the synchronization service respectively feeds back request response information to a first user process and a second user process in response to the first synchronization processing request and a received second synchronization processing request sent by the second user process, wherein the request response information carries a synchronization processing period of the data to be processed and an activation timestamp of the synchronization processing period, the second user process is a redundant process of the first user process;
a data processing module configured to process the data to be processed in the synchronization processing period based on the activation timestamp to obtain a first data processing result;
a first data processing result sending module configured to send the first data processing result to the synchronization service, so that the synchronization service compares the first data processing result with a received second data processing result sent by the second user process to obtain a comparison result, and sends the first data processing result, the second data processing result, and the comparison result to a consumer process when the comparison result is that the first data processing result is consistent with the second data processing result.

In another aspect, a data processing apparatus is provided, the apparatus comprises:
a synchronization processing request receiving module configured to respectively receive a first synchronization processing request sent by a first user process and a second synchronization processing request sent by a second user process, wherein the first synchronization processing request is configured to request the first user process to synchronously process data to be processed sent by a producer process, the second synchronization processing request is configured to request the second user process to synchronously process the data to be processed sent by the producer process, and the second user process is a redundant process of the first user process;
a synchronization processing request response module configured to: in response to the first synchronization processing request and the second synchronization processing request, respectively feed back request response information to the first user process and the second user process, wherein the request response information carries a synchronization processing period of the data to be processed and an activation timestamp of the synchronization processing period, so that the first user process and the second user process respectively process the data to be processed in the synchronization processing period based on the activation timestamp to obtain a first data processing result corresponding to the first user process and a second data processing result corresponding to the second user process;
a data processing result receiving module configured to respectively receive the first data processing result sent by the first user process and the second data processing result sent by the second user process;
a data processing result comparing module configured to compare the first data processing result with the second data processing result to obtain a comparison result;
a comparison result sending module configured to send the first data processing result, the second data processing result, and the comparison result to a consumer process when the comparison result is that the first data processing result is consistent with the second data processing result.

In another aspect, a data processing device is provided, the device comprises a processor and a memory, the memory stores at least one instruction or at least one program, the at least one instruction or at least one program is loaded and executed by the processor to implement the data processing method as described above.

In another aspect, a computer readable storage medium is provided, the storage medium stores at least one instruction or at least one program, the at least one instruction or at least one program is loaded and executed by a processor to implement the data processing method as described above.

The data processing method, apparatus, device, and storage medium provided by the present application have the following technical effects:
by using the technical solutions provided by the present application, in one aspect, the synchronization service can respectively feed back the synchronization processing period and the activation timestamp to the user process and its redundant process in response to the synchronization processing requests respectively sent by the user interface and its redundant process, so that the two processes synchronously process the data to be processed in the synchronization processing period based on the activation timestamp respectively, the consistence between data processing time of the two processes is ensured, and the stability and precision of deterministic time execution control are improved; in another aspect, the synchronization service respectively receives the respective data processing results of the two processes, and sends the two data processing results and the comparison result to the consumer process to perform sequent process of the data when the comparison result of the two data processing results is that the two data processing results are consistent, the functional safety requirement that executing two processes with different paths to calculate can generate the same output in the situation of the same input and internal state is realized, consistence and accuracy between data processing results of the two processes is ensured, and stability and precision of deterministic data execution control are improved; in another aspect, functional reliability and safety of autonomous driving systems are improved, and thus travelling safety of autonomous driving vehicles is improved.

### BRIEF DESCRIPTION OF THE DRAWINGS

In order to explain technical solutions and advantages of embodiments of the present application or of the prior art more clearly, drawings required to be used in description of the embodiments or of the prior art will be briefly introduced below. It is obvious that the drawings in the following description are only some embodiments of the present application. For one of ordinary skill in the art, other drawings can be further obtained according to these drawings on the premise of paying no creative work.
FIG. 1 is a schematic flow chart of a data processing method provided by an embodiment of the present application.
FIG. 2 is a schematic flow chart of another data processing method provided by an embodiment of the present application.
FIG. 3 is a schematic flow chart of another data processing method provided by an embodiment of the present application.
FIG. 4 is a schematic flow chart of another data processing method provided by an embodiment of the present application.
FIG. 5 is a schematic diagram of a data processing device provided by an embodiment of the present application.
FIG. 6 is a schematic diagram of another data processing device provided by an embodiment of the present application.
FIG. 7 is a schematic diagram of a data processing apparatus provided by an embodiment of the present application.
FIG. 8 is a schematic diagram of another data processing apparatus provided by an embodiment of the present application.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments. Based on the embodiments of the present application, any other embodiment obtained by one of ordinary skill in the art on the premise of paying no creative work should belong to the protection scope of the present application.

It needs to be noted that the terms "first", "second", and the like in the specification, the claims, and the aforementioned drawings of the present application are used to distinguish similar objects, and need not be used to describe a specific sequence or order. It should be understood that data used in this way can be interchanged in appropriate cases, so that the embodiments of the present application described herein can be implemented in order other than those illustrated or described herein. In addition, the terms "include", "have", as well as any variations thereof, are intended to cover non-exclusive inclusion. For example, a process, method, system, product, or service that includes a series of steps or units need not be limited to those clearly listed steps or units, but may include other steps or units that are not clearly listed or inherent to these processes, methods, products, or devices.

In an autonomous driving system, data processing is continuous and multi-segmented, and calculation results are finally output after the data processing across multiple service program nodes. In the whole data processing process, on the basis of the time certainty, a set of complete data processing mechanism is required to ensure correctness and safety of the data calculation results, so as to improve stability and safety of the autonomous driving system of the whole vehicle.

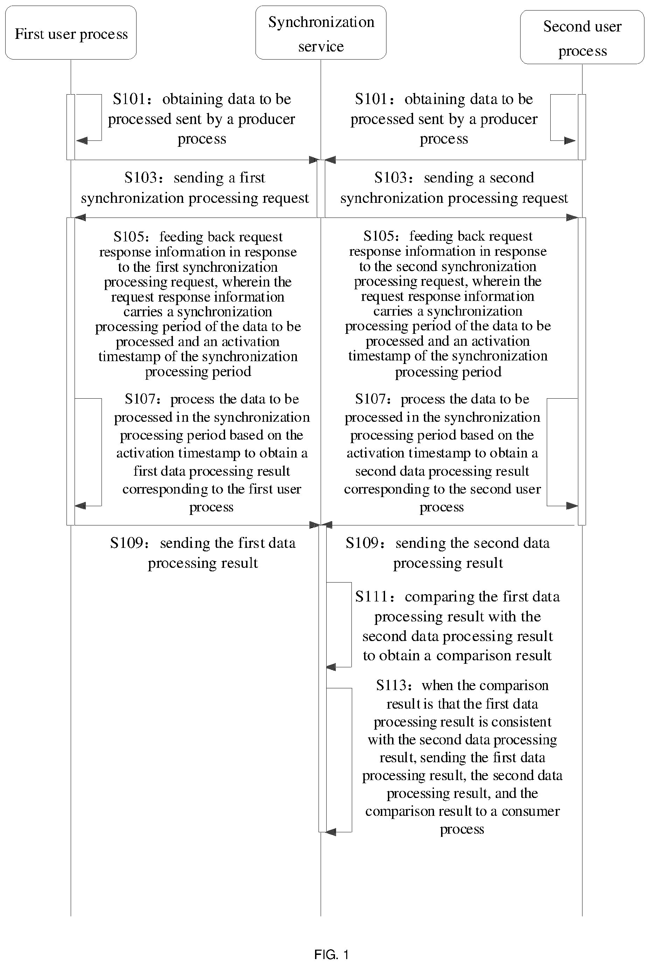

A data processing method provided by an embodiment of the present application is introduced below, FIG. 1 is a schematic flow chart of the data processing method provided by an embodiment of the present application. It should be noted that this specification provides the method operation steps as described in the embodiment or the flow chart, but based on conventional or non-creative labor, more or fewer operation steps may be included. The sequence of the steps listed in the embodiment is only one manner of many step execution sequences and does not represent a unique execution sequence. In execution of actual systems or products, they can be executed sequentially or executed in parallel (such as in parallel processors or multi-threaded processing environments) according to the methods shown in the embodiment or the drawings. Specifically, as shown in FIG. 1, the aforensaid method can include:

S101, a first user process and a second user process respectively obtain data to be processed sent by a producer process, wherein the second user process is a redundant process of the first user process.

In embodiments of this specification, the redundant process can be a process obtained by backing up a target user process used to process data; therefore, the second user process can be a backup process identical to the first user process.

In embodiments of this specification, the producer process can be a process generating data to be processed; in a specific embodimentm the producer process can be any one service node in multiple service nodes servicing for data processing of an autonomous driving system.

S103, the first user process and the second user process respectively send a first synchronization processing request and a second synchronization processing request to a synchronization service.

Specifically, the synchronization service can be a service process used to control the first user process and the second user process to perform synchronous data processing.

In embodiments of this specification, that the first user process sends the first synchronization processing request to the synchronization service can include that:
the first user process calls an interface waiting for synchronization processing in a synchronization slave process corresponding to the first user process, so that the corresponding synchronization slave process sends the first synchronization processing request.

In a specific embodiment, the synchronization slave process can include multiple API (Application Programming Interface), the multiple API can include but are not limited to: an lnit() interface (an initialization interface), a WaitForNextActivation() interface (an interface waiting for the next activation of the current service), a RunWorkerPool() interface (an interface for running a workpool), a GetActivationTime() interface (an interface for returning the activation time of the current service), and a GetNextActivationTime() interface (an interface for returning the next activation time of the current service). Specifically, the first user process, by calling the WaitForNextActivation() interface of the synchronization slave process, makes the corresponding synchronization slave process send the first synchronization processing request.

Specifically, the detailed steps of the embodiment in which the second user process sending the second synchronization processing request to the synchronization service are similar to the detailed steps of the embodiment in which the first user process sending the first synchronization processing request to the synchronization service mentioned above, and are not repeated here.

S105, the synchronization service respectively feeds back request response information to the first user process and the second user process in response to the first synchronization processing request and the second synchronization processing request, wherein the request response information carries a synchronization processing period of the data to be processed and an activation timestamp of the synchronization processing period.

Specifically, the synchronization service, after receiving the the first synchronization processing request and the second synchronization processing request, evaluates time of the first user process and the second user process synchronously processing the data to be processed to obtain the synchronization processing period and the activation timestamp of the synchronization processing period; and respectively sends the request response information carries request response time of the synchronization processing period and the activation timestamp to a synchronization slave process corresponding to the first user process and a synchronization slave process corresponding to the second user process, so that the synchronization slave process corresponding to the first user process feeds back the request response information to the first user process, and the synchronization slave process corresponding to the second user process feeds back the request response information to the second user process. Specifically, the first user process can obtain the request response information by calling the GetActivationTime() interface in the synchronization slave process corresponding to the first user process, and the second user process can obtain the request response information by calling the GetActivationTime() interface in the synchronization slave process corresponding to the second user process.

From the above embodiment, it can be seen that providing the activation control mechanism and activation time for data processing to the user processes by the synchronization slave processes corresponding to the user processes improves stability and precision of deterministic time execution control, and thereby ensures the synchronous execution of the data processing processes of the two processes.

S107, the first user process and the second user process respectively process the data to be processed in the synchronization processing period based on the activation timestamp to obtain a first data processing result corresponding to the first user process and a second data processing result corresponding to the second user process.

In embodiments of this specification, that the first user process processes the data to be processed in the synchronization processing period based on the activation timestamp to obtain the first data processing result corresponding to the first user process can include that:
the first user process, based on the activation timestamp, calls a work pool interface in the synchronization slave process corresponding to the first user process, so that multiple working threads in the work pool process the data to be processed in parallel based on a container iterator in the synchronization processing period to obtain the first data processing result; wherein the multiple working threads execute the same processing task.

Specifically, the container iterator can be an access tool for implementing traversing operations for all elements in a container, the container can be a tool for storing the elements, and the elements are each data in the data to be processed. The first user process, by calling the RunWorkerPool() interface, can allocate the data to be processed to each working thread through the container iterator, so that the multiple working threads can process the allocated data to be processed in parallel and circularly.

In actual use, the multiple working threads in the work pool can only be used to process multiple identical tasks in parallel, but cannot be used to process multiple different tasks in parallel, and the user processes cannot create threads by themselves to avoid risks caused by uncertain behaviors.

Specifically, the detailed steps of the embodiment in which the second user process processes the data to be processed in the synchronization processing period based on the activation timestamp to obtain the first data processing are similar to the detailed steps of the embodiment in which the first user process processes the data to be processed in the synchronization processing period based on the activation timestamp to obtain the first data processing result corresponding to the first user process, and are not repeated here.

From the above embodiment, it can be seen that: by the work pool mechanism, the capability of multiple working processes processing the same task in parallel is ensured, and the user processes are not allowed to create threads by themselves, thus safe and stability of data processing processes are improved, and risks caused by uncertain behaviors are avoided.

S109, the synchronization service respectively receives the first data processing result sent by the first user process and the second data processing result sent by the second user process.

S111, the synchronization service compares the first data processing result with the second data processing result to obtain a comparison result.

S113, when the comparison result is that the first data processing result is consistent with the second data processing result, the synchronization service sends the first data processing result, the second data processing result, and the comparison result to a consumer process.

In embodiments of this specification, the consumer process can be a process of consuming data processing results downstream of the producer process. In a specific embodiment, the consumer process can be any one service node of the multiple service nodes of the data processing service of the autonomous driving system.

Specifically, the synchronization service compares the first data processing result with the second data processing result, and sends the first data processing result, the second data processing result, and the comparison result to the consumer process when the comparison result is consistent, so as to ensure consistence between the data processing results of the first user process and the second process.

From the above embodiment, it can be seen that: in the condition of the same input and internal state, the functional safety requirement that executing two processes with different paths to calculate can generate the same output is realized; consistence and accuracy of the data processing results of the two processes are ensured, and stability and stability and precision of deterministic data execution control are improved.

In embodiments of this specification, data exchange between each process or service and the outside is realized through a communication management module. Specifically, the communication management module can be used to provide all communication functions among applications in an autonomous driving system environment, that is, a distributed real-time embedded environment.

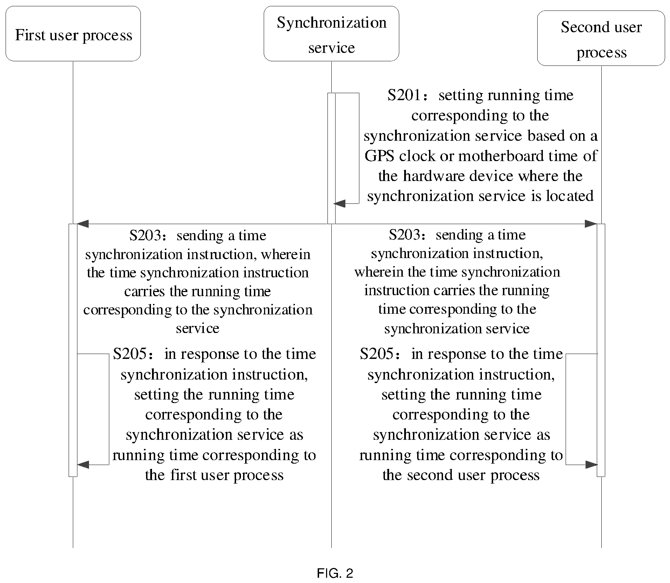

In an optional embodiment, in the case that the first user process, the second user process, and the synchronization service run on different hardware devices, as shown in FIG. 2, before the respectively receiving the first data processing result sent by the first user process and the second data processing result sent by the second user process, the method can further include:

S201, the synchronization service sets running time corresponding to the synchronization service based on a GPS clock or motherboard time of the hardware device where the synchronization service is located.
S203, the synchronization service respectively sends a time synchronization instruction to the first user process and the second user process, wherein the time synchronization instruction carries the running time corresponding to the synchronization service.
S205, the first user process and the second user process, in response to the time synchronization instruction, respectively set the running time corresponding to the synchronization service as running time corresponding to the first user process and running time corresponding to the second user process.

Specifically, the runnning time of the first user process, the second user process, and the synchronization service are synchronized based on the GPS clock and/or the motherboard time of the hardware device where the synchronization service is located to achieve time synchronization in the internal application environment, so that the first user process and the second user process located in different hardware devices synchronously execute the data to be processed based on the synchronization processing period and the activation timestamp in the case of time synchronization.

From the above embodiment, it can be seen that: by the time synchronization mechanism, the user processes and the redundant processes thereof, even being located in different hardware devices, are enabled to achieve synchronous processing of data, thereby improving redundant data processing capability of multi-equipment across ECU (Electronic Control Unit) of an autonomous driving system.

From the above embodiments of the present application, it can be seen that: by using the technical solutions provided by the embodiments of the present application, in one aspect, the synchronization service can respectively provide the activation control mechanism and the activation time for data processing to the user process and its redundant process through the synchronization slave process corresponding to the user process and the synchronization slave process corresponding to the redundant process thereof in response to the synchronization processing requests respectively sent by the user process and its redundant process, so that the two processes respectively synchronously process the data to be processed in the synchronization processing period based on the activation timestamp, consistence between data processing time of the two processes is ensured, and stability and precision of deterministic time execution control are improved, thus synchrounous execution of data processing processes of the two processes are ensured; in another aspect, by the work pool mechanism, the capability of multiple working processes processing the same task in parallel is ensured, and the user processes are not allowed to create threads by themselves, thus safe and stability of data processing processes are improved, and risks caused by uncertain behaviors are avoided; in another aspect, the synchronization service respectively receives the respective data processing results of the two processes, and in the case that the comparison result between the two data processing results is that the two data processing results are consistent, sends the two data processing results and the comparsion result to a consumer process to perform subsequent processing for data, the functional safety requirement that executing two processes with different paths to calculate in the condition of the same input and internal state can generate the same output is realized; consistence and accuracy of the data processing results of the two processes are ensured, and stability and precision of deterministic data execution control are improved; in another aspect, by the time synchronization mechanism, the two processes, even being located in different hardware devices, are enabled to achieve synchronous processing of data, thereby improving redundant data processing capability of multi-equipment across ECU of an autonomous driving system; in another aspect, functional reliability and safety of autonomous driving systems are improved, and thus travelling safety of autonomous driving vehicles is improved.

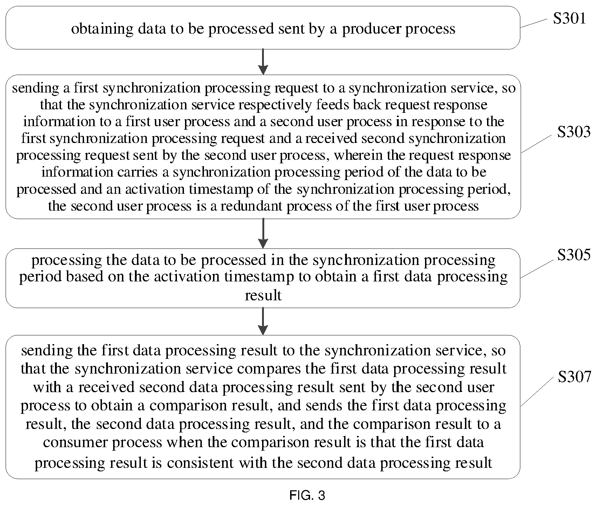

Another data processing method provided by an embodiment of the present application, taking the first user process as an execution subject, is introduced below. FIG. 3 is a schematic flow chart of another data processing method provided by an embodiment of the present application. It should be noted that this specification provides the method operation steps as described in the embodiment or the flow chart, but based on conventional or non-creative labor, more or fewer operation steps may be included. The sequence of the steps listed in the embodiment is only one manner of many step execution sequences and does not represent a unique execution sequence. In execution of actual systems or products, they can be executed sequentially or executed in parallel (such as in parallel processors or multi-threaded processing environments) according to the methods shown in the embodiment or the drawings. Specifically, as shown in FIG. 3, the aforensaid method can include:

S301, obtaining data to be processed sent by a producer process.

S303, sending a first synchronization processing request to a synchronization service, so that the synchronization service respectively feeds back request response information to a first user process and a second user process in response to the first synchronization processing request and a received second synchronization processing request sent by the second user process, wherein the request response information carries a synchronization processing period of the data to be processed and an activation timestamp of the synchronization processing period, the second user process is a redundant process of the first user process.

In embodiments of this specification, the sending the first synchronization processing request to the synchronization service can include:
calling a waiting synchronization processing interface in a synchronization slave process corresponding to the first user process, so that the corresponding synchronization slave process sends the first synchronization processing request.

S305, processing the data to be processed in the synchronization processing period based on the activation timestamp to obtain a first data processing result.

In embodiments of this specification, the processing the data to be processed in the synchronization processing period based on the activation timestamp to obtain a first data processing result can include:
based on the activation timestamp, calling a work pool interface in the synchronization slave process corresponding to the first user process, so that multiple working threads in the work pool process the data to be processed in parallel based on a container iterator in the synchronization processing period to obtain the first data processing result; wherein the multiple working threads execute the same processing task.

S307, sending the first data processing result to the synchronization service, so that the synchronization service compares the first data processing result with a received second data processing result sent by the second user process to obtain a comparison result, and sends the first data processing result, the second data processing result, and the comparison result to a consumer process when the comparison result is that the first data processing result is consistent with the second data processing result.

In an optional embodiment, in the case that the first user process, the second user process, and the synchronization service run on different hardware devices, the method can further include:
1) receiving a time sychronization instruction sent by the synchronization service, wherein the time sychronization instruction carries running time corresponding to the synchronization service, and the running time corresponding to the synchronization service is obtained by setting based on a GPS clock or motherboard time of the hardware device where the synchronization service is located.
2) in response to the time sychronization instruction, setting the running time corresponding to the synchronization service as running time corresponding to the first user process.

The specific detailed steps of the embodiment of the data processing method written unilaterally from the first user process can refer to the embodiment of the data processing method from interacting sides, and are not repeated here. The data processing method written unilaterally from the second user process is similar to the the data processing method written unilaterally from the first user process, and is not repeated here.

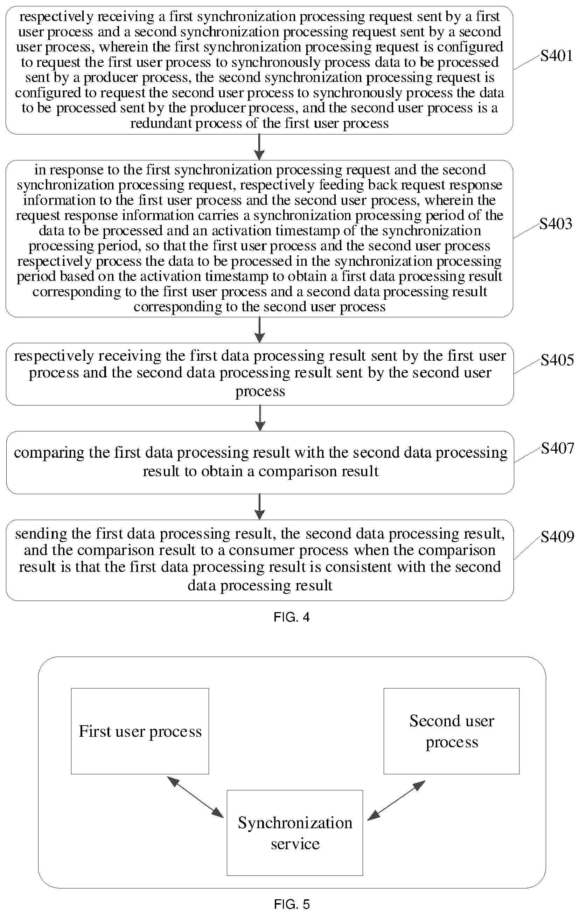

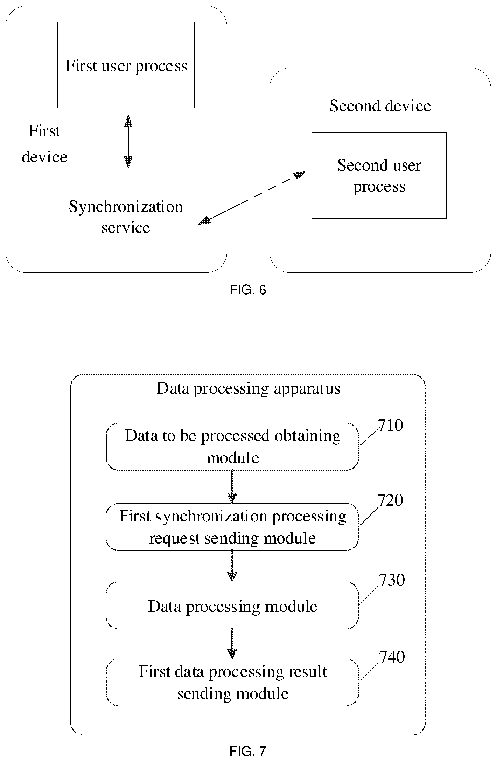

Another data processing method provided by an embodiment of the present application, taking the synchronization service as an execution subject, is introduced below. FIG. 4 is a schematic flow chart of another data processing method provided by an embodiment of the present application. It should be noted that this specification provides the method operation steps as described in the embodiment or the flow chart, but based on conventional or non-creative labor, more or fewer operation steps may be included. The sequence of the steps listed in the embodiment is only one manner of many step execution sequences and does not represent a unique execution sequence. In execution of actual systems or products, they can be executed sequentially or executed in parallel (such as in parallel processors or multi-threaded processing environments) according to the methods shown in the embodiment or the drawings. Specifically, as shown in FIG. 7, the aforensaid method can include:

S401, respectively receiving a first synchronization processing request sent by a first user process and a second synchronization processing request sent by a second user process, wherein the first synchronization processing request is configured to request the first user process to synchronously process data to be processed sent by a producer process, the second synchronization processing request is configured to request the second user process to synchronously process the data to be processed sent by the producer process, and the second user process is a redundant process of the first user process.

S403, in response to the first synchronization processing request and the second synchronization processing request, respectively feeding back request response information to the first user process and the second user process, wherein the request response information carries a synchronization processing period of the data to be processed and an activation timestamp of the synchronization processing period, so that the first user process and the second user process respectively process the data to be processed in the synchronization processing period based on the activation timestamp to obtain a first data processing result corresponding to the first user process and a second data processing result corresponding to the second user process.

S405, respectively receiving the first data processing result sent by the first user process and the second data processing result sent by the second user process.

S407, comparing the first data processing result with the second data processing result to obtain a comparison result.

S409, sending the first data processing result, the second data processing result, and the comparison result to a consumer process when the comparison result is that the first data processing result is consistent with the second data processing result.

In an optional embodiment, in the case that the first user process, the second user process, and the synchronization service run on different hardware devices, before the respectively receiving the first data processing result sent by the first user process and the second data processing result sent by the second user process, the method can further include:

1) setting running time corresponding to the synchronization service based on a GPS clock or motherboard time of the hardware device where the synchronization service is located.

2) respectively sending a time synchronization instruction to the first user process and the second user process, wherein the time synchronization instruction carries the running time corresponding to the synchronization service, so that the first user process, in response to the time synchronization instruction, sets the running time corresponding to the synchronization service as running time corresponding to the first user process, and the second user process, in response to the time synchronization instruction, sets the running time corresponding to the synchronization service as running time corresponding to the second user process.

The specific detailed steps of the embodiment of the data processing method written unilaterally from the synchronization service can refer to the embodiment of the data processing method from interacting sides, and are not repeated here.

An embodiment of the present application further provides a data processing device configured to implement the method shown in FIG. 1. The device embodiment is in correspondence with the aforesaid method embodiments and can realize all content of the aforesaid method embodiments. For ease of reading, this device embodiment only briefly describes the content in the aforementioned method embodiments, and does not elaborate the details in the method embodiments one by one. As shown in FIG. 5, the device runs a first user process, a second user process, and a synchronization service, the second user process is a redundant process of the first user process; wherein:
the first user process is configured to: obtain data to be processed sent by a producer process; send a first synchronization processing request to the synchronization service; receive request response information sent by the synchronization service, wherein the request response information carries a synchronization processing period of the data to be processed and an activation timestamp of the synchronization processing period; process the data to be processed in the synchronization processing period based on the activation timestamp to obtain a first data processing result; send the first data processing result to the synchronization service.
the second user process is configured to: obtain the data to be processed sent by the producer process; send a second synchronization processing request to the synchronization service; receive the request response information sent by the synchronization service; process the data to be processed in the synchronization processing period based on the activation timestamp to obtain a second data processing result; send the second data processing result to the synchronization service.
the synchronization service is configured to: respectively receive the first synchronization processing request sent by the first user process and the second synchronization processing request sent by the second user process; in response to the first synchronization processing request and the second synchronization processing request, respectively feed back the request response information to the first user process and the second user process; respectively receive the first data processing result sent by the first user process and the second data processing result sent by the second user process; compare the first data processing result with the second data processing result to obtain a comparison result; send the first data processing result, the second data processing result, and the comparison result to a consumer process when the comparison result is that the first data processing result is consistent with the second data processing result.

In embodiments of this specification, the device further runs a synchronization slave process corresponding to the first user process and a synchronization slave process corresponding to the second user process, wherein:
the first user process is further configured to call an interface waiting for synchronization processing in the synchronization slave process corresponding to the first user process;
the synchronization slave process corresponding to the first user process is further configured to send the first synchronization processing request to the synchronization service;
the second user process is further configured to call an interface waiting for synchronization processing in the synchronization slave process corresponding to the second user process;
the synchronization slave process corresponding to the second user process is further configured to send the second synchronization processing request to the synchronization service.

In embodiments of this specification, the first user process is further configured to: based on the activation timestamp, calls a work pool interface in the synchronization slave process corresponding to the first user process, so that multiple working threads in the work pool process the data to be processed in parallel based on a container iterator in the synchronization processing period to obtain the first data processing result; wherein the multiple working threads execute the same processing task;
the second user process is further configured to: based on the activation timestamp, calls a work pool interface in the synchronization slave process corresponding to the second user process, so that multiple working threads in the work pool process the data to be processed in parallel based on a container iterator in the synchronization processing period to obtain the second data processing result; wherein the multiple working threads execute the same processing task.

In an optional embodiment, the first user process and the second user process can further run on different devices. Since the first user process and the second user process run on different devices, it is required to perform time synchronization for the different devices so as to ensure consistence between data processing time of the first user process and of the second user process. Specifically, as shown in FIG. 6, the first user process and the synchronization service run on a first device, and the second user process runs on a second device; wherein:
the synchronization service is further configured to: set running time corresponding to the synchronization service based on a GPS clock or motherboard time of the hardware device where the synchronization service is located; respectively send a time synchronization instruction to the first user process and the second user process, wherein the time synchronization instruction carries the running time corresponding to the synchronization service;
the first user process is further configured to: in response to the time synchronization instruction, set the running time corresponding to the synchronization service as running time corresponding to the first user process;
the second user process is further configured to: in response to the time synchronization instruction, set the running time corresponding to the synchronization service as running time corresponding to the second user process.

An embodiment of the present application provides a data processing apparatus taking the first user process as an execution subject, as shown in FIG. 7, the apparatus can include:
a data to be processed obtaining module 710 configured to obtain data to be processed sent by a producer process;
a first synchronization processing request sending module 720 configured to send a first synchronization processing request to a synchronization service, so that the synchronization service respectively feeds back request response information to a first user process and a second user process in response to the first synchronization processing request and a received second synchronization processing request sent by the second user process, wherein the request response information carries a synchronization processing period of the data to be processed and an activation timestamp of the synchronization processing period, the second user process is a redundant process of the first user process;
a data processing module 730 configured to process the data to be processed in the synchronization processing period based on the activation timestamp to obtain a first data processing result;
a first data processing result sending module 740 configured to send the first data processing result to the synchronization service, so that the synchronization service compares the first data processing result with a received second data processing result sent by the second user process to obtain a comparison result, and sends the first data processing result, the second data processing result, and the comparison result to a consumer process when the comparison result is that the first data processing result is consistent with the second data processing result.

In embodiments of this specification, the first synchronization processing request sending module 720 can include:
a waiting for synchronization processing interface calling unit configured to: call an interface waiting for synchronization processing in the synchronization slave process corresponding to the first user process, so that the corresponding synchronization slave process sends the first synchronization processing request.

In embodiments of this specification, the data processing module 730 can include:
a work pool interface calling unit configured to: configured to: based on the activation timestamp, call a work pool interface in the synchronization slave process corresponding to the first user process, so that multiple working threads in the work pool process the data to be processed in parallel based on a container iterator in the synchronization processing period to obtain the first data processing result; wherein the multiple working threads execute the same processing task.

In an optional embodiment, in the case that the first user process, the second user process, and the synchronization service run on different hardware devices, the apparatus can further include:
a time synchronization instruction receiving module configured to receive a time synchronization instruction sent by the synchronization service, wherein the time synchronization instruction carries running time corresponding to the synchronization service, the running time corresponding to the synchronization service is obtained by setting based on a GPS clock or motherboard time of the hardware device where the synchronization service is located;
a time synchronization module configured to set the running time corresponding to the synchronization service as running time corresponding to the first user process in response to the time synchronization instruction.

The apparatus in the apparatus embodiment taking the first user process as an execution subject is based on the same invention concept as that of the method embodiments, and is not repeated one by one here. Moreover, the apparatus embodiment taking the second user process as an execution subject is similar to the apparatus embodiment taking the first user process as an execution subject, and is not repeated one by one here.

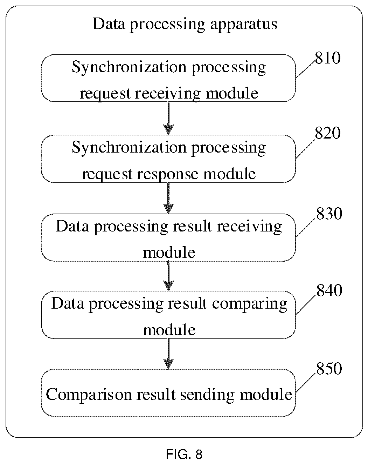

An embodiment of the present application provides another data processing apparatus taking the synchronization service as an execution subject, as shown in FIG. 8, the apparatus can include:
a synchronization processing request receiving module 810 configured to respectively receive a first synchronization processing request sent by a first user process and a second synchronization processing request sent by a second user process, wherein the first synchronization processing request is configured to request the first user process to synchronously process data to be processed sent by a producer process, the second synchronization processing request is configured to request the second user process to synchronously process the data to be processed sent by the producer process, and the second user process is a redundant process of the first user process;
a synchronization processing request response module 820 configured to: in response to the first synchronization processing request and the second synchronization processing request, respectively feed back request response information to the first user process and the second user process, wherein the request response information carries a synchronization processing period of the data to be processed and an activation timestamp of the synchronization processing period, so that the first user process and the second user process respectively process the data to be processed in the synchronization processing period based on the activation timestamp to obtain a first data processing result corresponding to the first user process and a second data processing result corresponding to the second user process;
a data processing result receiving module 830 configured to respectively receive the first data processing result sent by the first user process and the second data processing result sent by the second user process;
a data processing result comparing module 840 configured to compare the first data processing result with the second data processing result to obtain a comparison result;
a comparison result sending module 850 configured to send the first data processing result, the second data processing result, and the comparison result to a consumer process when the comparison result is that the first data processing result is consistent with the second data processing result.

In an optional embodiment, in the case that the first user process, the second user process, and the synchronization service run on different hardware devices, before the respectively receiving the first data processing result sent by the first user process and the second data processing result sent by the second user process, the apparatus can further include:
a running time setting module configured to set running time corresponding to the synchronization service based on a GPS clock or motherboard time of the hardware device where the synchronization service is located;
a time synchronization instruction sending module configured to respectively send a time synchronization instruction to the first user process and the second user process, wherein the time synchronization instruction carries the running time corresponding to the synchronization service, so that the first user process, in response to the time synchronization instruction, sets the running time corresponding to the synchronization service as running time corresponding to the first user process, and the second user process, in response to the time synchronization instruction, sets the running time corresponding to the synchronization service as running time corresponding to the second user process.

The apparatus in the apparatus embodiment taking the synchronization service as an execution subject is based on the same invention concept as that of the method embodiments, and is not repeated one by one here.

An embodiment of the present application provides a data processing device, the data processing device includes a processor and a memory, the memory stores at least one instruction or at least one program, the at least one instruction or at least one program is loaded and executed by the processor to implement the data processing method as provided by the above method embodiments.

The memory can be used to store software programs and modules, and the processor executes various functional applications and data processing by running the software programs and modules stored in memory. The memory can mainly include a program storage area and a data storage area, wherein the program storage area can store operating systems, application programs required by functions, etc; the data storage area can store data created based on the use of the aforesaid device. In addition, the memory may include a high-speed random access memory, and may also include a non-volatile memory, such as at least one disk storage device, a flash memory device, or other volatile solid-state storage devices. Correspondingly, the memory may also include a memory controller to provide processor access to the memory.

The method embodiments provided by embodiments of the present application can be executed in an operating system of a vehicle terminal or similar computing devices, that is, the computer equipment mentioned above can include a vehicle terminal or similar computing devices.

An embodiment of the present application further provides a storage medium, the storage medium can be provided in a server to store at least one instruction or at least one program related to a data processing method configured to implement one kind of the method embodiments, the at least one instruction or at least one program is loaded and executed by the processor to implement the data processing method provided by the above method embodiments.

Optionally, in this embodiment, the above storage medium can be located on at least one network server in multiple network servers in a computer network. Optionally, in this embodiment, the above-mentioned storage media may include but are not limited to: USB flash drives, Read Only Memory (ROM), Random Access Memory (RAM), portable hard drives, disks, or optical discs, and other types of media that can store program codes.

From the above embodiments of the data processing methods, apparatuses, devices, and storage mediums provided by the present application, it can be seen that: by using the technical solutions provided by the embodiments of the present application, in one aspect, the synchronization service can respectively provide the activation control mechanism and the activation time for data processing to the user process and its redundant process through the synchronization slave process corresponding to the user process and the synchronization slave process corresponding to the redundant process thereof in response to the synchronization processing requests respectively sent by the user process and its redundant process, so that the two processes respectively synchronously process the data to be processed in the synchronization processing period based on the activation timestamp, consistence between data processing time of the two processes is ensured, and stability and precision of deterministic time execution control are improved, thus synchrounous execution of data processing processes of the two processes are ensured; in another aspect, by the work pool mechanism, the capability of multiple working processes processing the same task in parallel is ensured, and the user processes are not allowed to create threads by themselves, thus safe and stability of data processing processes are improved, and risks caused by uncertain behaviors are avoided; in another aspect, the synchronization service respectively receives the respective data processing results of the two processes, and in the case that the comparison result between the two data processing results is that the two data processing results are consistent, sends the two data processing results and the comparsion result to a consumer process to perform subsequent processing for data, the functional safety requirement that executing two processes with different paths to calculate in the condition of the same input and internal state can generate the same output is realized; consistence and accuracy of the data processing results of the two processes are ensured, and stability and precision of deterministic data execution control are improved; in another aspect, by the time synchronization mechanism, the two processes, even being located in different hardware devices, are enabled to achieve synchronous processing of data, thereby improving redundant data processing capability of multi-equipment across ECU of an autonomous driving system; in another aspect, functional reliability and safety of autonomous driving systems are improved, and thus travelling safety of autonomous driving vehicles is improved.

It should be noted that the order of the above embodiments of the present application is only for description and does not represent the superiority or inferiority of the embodiments. Moreover, the specific embodiments of the present application are described above, and other embodiments are within the scope of the attached claims. In some cases, the actions or steps recorded in the claims may be executed in an order different from those in the embodiments and still achieve the desired results. In addition, the process depicted in the drawings does not necessarily require a shown specific order or continuous order to achieve the desired results. In some embodiments, multi-tasking processing and parallel processing are also possible or may be advantageous.

The various embodiments in this specification are all described in a progressive manner, and the same and similar parts of these embodiments can be referred to each other. Each embodiment focuses on differences from other embodiments. Especially for the embodiments of apparatuses, devices, and storage media, since they are basically similar to the method embodiments, the description is relatively simple. The relative parts can refer to the partial explanation of the method embodiments.

Ordinary technical personnel in this field can understand that all or some of the steps to implement the above embodiments can be completed through hardware, and can also be completed by instructing related hardware through programs. The above programs can be stored in a computer-readable storage medium, the aforementioned storage medium can be read-only memories, disks, or optical discs, etc.

The above described are only preferred embodiments of the present application and are not intended to limit the present application. Any modification, equivalent replacement, improvement, and the like made within the spirit and principle of the present application should be included within the protection scope of the present application.

## Claims

1. A data processing method, **characterized in that** the method comprises:
obtaining data to be processed sent by a producer process;
sending a first synchronization processing request to a synchronization service, so that the synchronization service respectively feeds back request response information to a first user process and a second user process in response to the first synchronization processing request and a received second synchronization processing request sent by the second user process, wherein the request response information carries a synchronization processing period of the data to be processed and an activation timestamp of the synchronization processing period, the second user process is a redundant process of the first user process;
processing the data to be processed in the synchronization processing period based on the activation timestamp to obtain a first data processing result;
sending the first data processing result to the synchronization service, so that the synchronization service compares the first data processing result with a received second data processing result sent by the second user process to obtain a comparison result, and sends the first data processing result, the second data processing result, and the comparison result to a consumer process when the comparison result is that the first data processing result is consistent with the second data processing result.

2. The method according to claim 1, **characterized in that** the sending the first synchronization processing request to the synchronization service comprises:
calling a waiting synchronization processing interface in a synchronization slave process corresponding to the first user process, so that the corresponding synchronization slave process sends the first synchronization processing request.

3. The method according to claim 1, **characterized in that** the processing the data to be processed in the synchronization processing period based on the activation timestamp to obtain a first data processing result comprises:
based on the activation timestamp, calling a work pool interface in the synchronization slave process corresponding to the first user process, so that multiple working threads in the work pool process the data to be processed in parallel based on a container iterator in the synchronization processing period to obtain the first data processing result; wherein the multiple working threads execute the same processing task.

4. The method according to any one of claims 1-3, **characterized in that** in the case that the first user process, the second user process, and the synchronization service run on different hardware devices, the method further comprises:
receiving a time sychronization instruction sent by the synchronization service, wherein the time sychronization instruction carries running time corresponding to the synchronization service, and the running time corresponding to the synchronization service is obtained by setting based on a GPS clock or motherboard time of the hardware device where the synchronization service is located;
in response to the time sychronization instruction, setting the running time corresponding to the synchronization service as running time corresponding to the first user process.

5. A data processing method, **characterized in that** the method comprises:
respectively receiving a first synchronization processing request sent by a first user process and a second synchronization processing request sent by a second user process, wherein the first synchronization processing request is configured to request the first user process to synchronously process data to be processed sent by a producer process, the second synchronization processing request is configured to request the second user process to synchronously process the data to be processed sent by the producer process, and the second user process is a redundant process of the first user process;
in response to the first synchronization processing request and the second synchronization processing request, respectively feeding back request response information to the first user process and the second user process, wherein the request response information carries a synchronization processing period of the data to be processed and an activation timestamp of the synchronization processing period, so that the first user process and the second user process respectively process the data to be processed in the synchronization processing period based on the activation timestamp to obtain a first data processing result corresponding to the first user process and a second data processing result corresponding to the second user process;
respectively receiving the first data processing result sent by the first user process and the second data processing result sent by the second user process;
comparing the first data processing result with the second data processing result to obtain a comparison result;
sending the first data processing result, the second data processing result, and the comparison result to a consumer process when the comparison result is that the first data processing result is consistent with the second data processing result.

6. The method according to claim 5, **characterized in that** in the case that the first user process, the second user process, and the synchronization service run on different hardware devices, before the respectively receiving the first data processing result sent by the first user process and the second data processing result sent by the second user process, the method further comprises:
setting running time corresponding to the synchronization service based on a GPS clock or motherboard time of the hardware device where the synchronization service is located;
respectively sending a time synchronization instruction to the first user process and the second user process, wherein the time synchronization instruction carries the running time corresponding to the synchronization service, so that the first user process, in response to the time synchronization instruction, sets the running time corresponding to the synchronization service as running time corresponding to the first user process, and the second user process, in response to the time synchronization instruction, sets the running time corresponding to the synchronization service as running time corresponding to the second user process.

7. A data processing device, **characterized in that** the device runs a first user process, a second user process, and a synchronization service, the second user process is a redundant process of the first user process; wherein:
the first user process is configured to: obtain data to be processed sent by a producer process; send a first synchronization processing request to the synchronization service; receive request response information sent by the synchronization service, wherein the request response information carries a synchronization processing period of the data to be processed and an activation timestamp of the synchronization processing period; process the data to be processed in the synchronization processing period based on the activation timestamp to obtain a first data processing result; send the first data processing result to the synchronization service;
the second user process is configured to: obtain the data to be processed sent by the producer process; send a second synchronization processing request to the synchronization service; receive the request response information sent by the synchronization service; process the data to be processed in the synchronization processing period based on the activation timestamp to obtain a second data processing result; send the second data processing result to the synchronization service;
the synchronization service is configured to: respectively receive the first synchronization processing request sent by the first user process and the second synchronization processing request sent by the second user process; in response to the first synchronization processing request and the second synchronization processing request, respectively feed back the request response information to the first user process and the second user process; respectively receive the first data processing result sent by the first user process and the second data processing result sent by the second user process; compare the first data processing result with the second data processing result to obtain a comparison result; send the first data processing result, the second data processing result, and the comparison result to a consumer process when the comparison result is that the first data processing result is consistent with the second data processing result.

8. A data processing apparatus, **characterized in that** the apparatus comprises:
a data to be processed obtaining module configured to obtain data to be processed sent by a producer process;
a first synchronization processing request sending module configured to send a first synchronization processing request to a synchronization service, so that the synchronization service respectively feeds back request response information to a first user process and a second user process in response to the first synchronization processing request and a received second synchronization processing request sent by the second user process, wherein the request response information carries a synchronization processing period of the data to be processed and an activation timestamp of the synchronization processing period, the second user process is a redundant process of the first user process;
a data processing module configured to process the data to be processed in the synchronization processing period based on the activation timestamp to obtain a first data processing result;
a first data processing result sending module configured to send the first data processing result to the synchronization service, so that the synchronization service compares the first data processing result with a received second data processing result sent by the second user process to obtain a comparison result, and sends the first data processing result, the second data processing result, and the comparison result to a consumer process when the comparison result is that the first data processing result is consistent with the second data processing result.

9. A data processing apparatus, **characterized in that** the apparatus comprises:
a synchronization processing request receiving module configured to respectively receive a first synchronization processing request sent by a first user process and a second synchronization processing request sent by a second user process, wherein the first synchronization processing request is configured to request the first user process to synchronously process data to be processed sent by a producer process, the second synchronization processing request is configured to request the second user process to synchronously process the data to be processed sent by the producer process, and the second user process is a redundant process of the first user process;
a synchronization processing request response module configured to: in response to the first synchronization processing request and the second synchronization processing request, respectively feed back request response information to the first user process and the second user process, wherein the request response information carries a synchronization processing period of the data to be processed and an activation timestamp of the synchronization processing period, so that the first user process and the second user process respectively process the data to be processed in the synchronization processing period based on the activation timestamp to obtain a first data processing result corresponding to the first user process and a second data processing result corresponding to the second user process;
a data processing result receiving module configured to respectively receive the first data processing result sent by the first user process and the second data processing result sent by the second user process;
a data processing result comparing module configured to compare the first data processing result with the second data processing result to obtain a comparison result;
a comparison result sending module configured to send the first data processing result, the second data processing result, and the comparison result to a consumer process when the comparison result is that the first data processing result is consistent with the second data processing result.

10. A data processing device, **characterized in that** the device comprises a processor and a memory, the memory stores at least one instruction or at least one program, the at least one instruction or at least one program is loaded and executed by the processor to implement the data processing method according to any one of claims 1-7.

11. A computer readable storage medium, **characterized in that** the storage medium stores at least one instruction or at least one program, the at least one instruction or at least one program is loaded and executed by a processor to implement the data processing method according to any one of claims 1-7.
